# EUROPEAN PATENT APPLICATION

(11) **EP 2 933 736 A1**
(43) Date of publication of application: **21.10.2015**
(21) Application number: 14198687.7
(22) Date of filing: 17.12.2014
(51) Int. Cl.: G06F 17/30

(54) **Searching method and search engine**

(30) Priority: 14.04.2014 CN 201410148910
(71) Applicant: Baidu Online Network Technology (Beijing) Co., Ltd, Beijing 100085 (CN)
(72) Inventor: Wang, Haifeng, Beijing 100085 (CN); Huang, Jizhou, Beijing 100085 (CN); Li, Ying, Beijing 100085 (CN); Wu, Hua, Beijing 100085 (CN)
(74) Representative: m patent group

(57) **Abstract**

The present disclosure provides a searching method and a search engine (100). The searching method includes: obtaining by a search engine a search query; determining by the search engine a first search result and a first navigation guide corresponding to the search query according to the search query, and providing by the search engine the first search result and the first navigation guide in a search result page; obtaining by the search engine an operation on the first navigation guide from a user, and updating by the search engine the first search result and the first navigation guide in the search result page according to the first navigation guide corresponding to the operation of the user. To perform this searching method, the corresponding search engine (100) comprises a first obtaining module (110), a determining module (120), a providing module (130), a second obtaining module (140), and an updating module (150).

## Description

### FIELD

Embodiments of the present disclosure generally relate to a search technology, and more particularly, to a searching method and a search engine.

### BACKGROUND

Currently, a user usually obtains internet information by using a search engine. Specifically, firstly, the user inputs a search query, and then the search engine matches search results corresponding to the search query in web pages or web services according to the search query input by the user, and provides the search results to the user after sequencing the search results, finally, the user obtains the internet information according to the search results provided by the search engine.

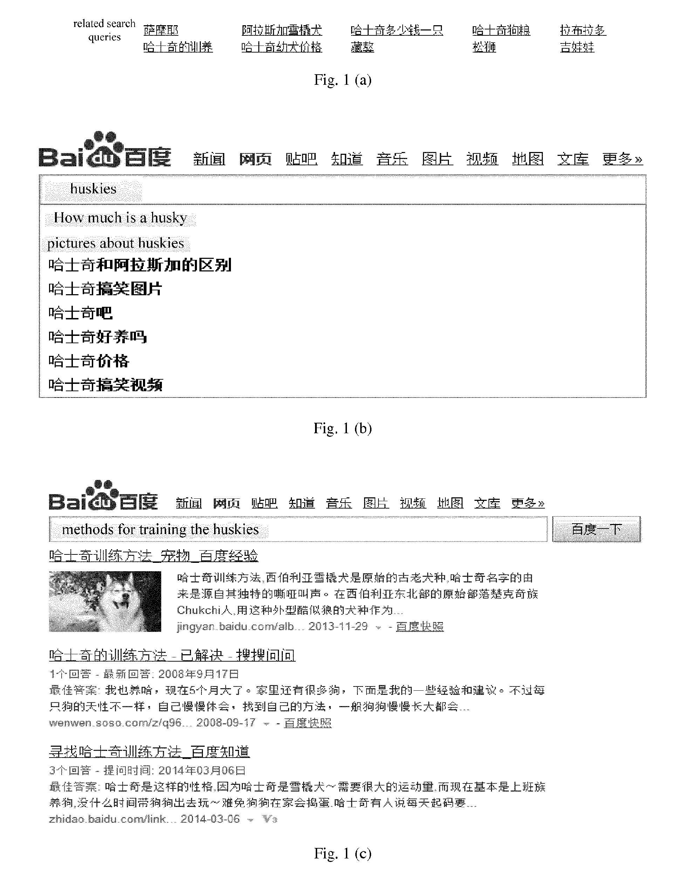

There are some problems in the above-described searching mechanism based on a search query matching, which are as follows. (1) The user may not know how to build the search query, and thus the search results meeting a demand of the user cannot be obtained. (2) If the search results do not meet the demand of the user, the user needs to vary the search query to perform a search again. For example, referring to Fig. 1(a) which is a schematic diagram of related search queries provided by a search engine according to a related art, the user can click on the related search queries provided by the search engine to perform a search again, however, if the user wants to buy a husky but is not familiar with huskies, the related search queries cannot meet the demand of the user who wants to get reference information about huskies before buying a husky; referring to Fig. 1(b) which is a schematic diagram of recommendations provided by the search engine according to a related art, the user can select a recommendation from the recommendations provided by the search engine to perform a search again. Since the recommendations are expanded based on the search query input by the user, only hot search queries can be provided to the user and there is still a possibility that the hot search queries cannot meet the demand of the user. (3) If the user focuses on an attribute or correlation information of a thing (such as an entity and a resource) which is difficult to describe, the user usually inputs a broad search query without the attribute or correlation information to perform a search, which may lead to a result that the search results are not precise enough, thus increasing a search cost of the user.

In summary, it shows that the user is not satisfied with the current search result corresponding to the search query and wants to get a better search result when the user modifies the search query, clicks on the related search queries, or uses the recommendations. However, if the user cannot obtain a satisfactory search result provided by the search engine by modifying the search query, clicking on the related search queries, or using the recommendations, a satisfaction of the user may be decreased, or the user may abandon the search engine if the user tries several times without obtaining any useful search result, which is an injury to the user.

In addition, with the above-described searching mechanism based on a search query matching, the search results provided by the search engine often cannot satisfy the demand of the user. Referring to Fig. 1(c), Fig. 1(c) is a schematic diagram of search results provided by the search engine according to a related art. As shown in Fig. 1 (c), the user inputs the search query "methods for training the huskies", at this time, the user wishes to obtain a complete set of methods for training the huskies, however, the search results apparently cannot meet the demand of the user.

### SUMMARY

Embodiments of the present disclosure seek to solve at least one of the problems existing in the related art to at least some extent.

Accordingly, a first objective of the present disclosure is to provide a searching method.

A second objective of the present disclosure is to provide a search engine.

In order to achieve above objectives, according to embodiments of a first aspect of the present disclosure, a searching method is provided, including: obtaining by a search engine a search query; determining by the search engine a first search result and a first navigation guide corresponding to the search query according to the search query, and providing by the search engine the first search result and the first navigation guide in a search result page; obtaining by the search engine an operation on the first navigation guide from a user, and updating by the search engine the first search result and the first navigation guide in the search result page according to the first navigation guide corresponding to the operation of the user.

With the searching method according to an embodiment of the present disclosure, by determining by the search engine the first search result and the first navigation guide corresponding to the search query according to the search query, on the one hand, the user can locate the search query corresponding to his/her demand and the corresponding search result quickly according to the first navigation guide, and the defect of the related art that the user does not know how to build the search query to obtain the search result meeting the demand of the user may be overcome, such that even if the user does not know how to build the search query, the search result meeting the demand of the user can be gradually defined according to the first navigation guide; on the other hand, the user can obtain the corresponding search results by clicking on different navigation guides in the search result page without performing a search again. In addition, the first navigation guide corresponding to the search query may be information associated with a semantic meaning of the search query and being configured for describing the search query in many aspects. For example, the first navigation guide may be lateral correlation information of the search query also may be correlation information corresponding to a plurality of demand dimensions of the search query. The first navigation guide can guide the user in many aspects to enable the user to select an appropriate search query and to obtain the search result meeting the demand of the user.

In order to achieve the above objectives, according to embodiments of a second aspect of the present disclosure, the search engine is provided, including: a first obtaining module, configured to obtain a search query; a determining module, configured to determine a first search result and a first navigation guide corresponding to the search query according to the search query; a providing module, configured to provide the first search result and the first navigation guide in a search result page; a second obtaining module, configured to obtain an operation on the first navigation guide from a user; an updating module, configured to update the first search result and the first navigation guide in the search result page according to the first navigation guide corresponding to the operation of the user.

With the search engine according to an embodiment of the present disclosure, by determining by the search engine the first search result and the first navigation guide corresponding to the search query according to the search query, on the one hand, the user can locate the search query corresponding to his/her demand and the corresponding search result quickly according to the first navigation guide, and the defect of the related art that the user does not know how to build the search query to obtain the search result meeting the demand of the user may be overcome, such that even if the user does not know how to build the search query, the search result meeting the demand of the user can be gradually defined according to the first navigation guide; on the other hand, the user can obtain the corresponding search results by clicking on different navigation guides in the search result page without performing a search again. In addition, the first navigation guide corresponding to the search query may be information associated with a semantic meaning of the search query and being configured for describing the search query in many aspects. For example, the first navigation guide may be lateral correlation information of the search query, also may be correlation information corresponding to a plurality of demand dimensions of the search query. The first navigation guide can guide the user in many aspects to enable the user to select an appropriate search query and to obtain the search result meeting the demand of the user.

Embodiments of a third aspect of the present disclosure provide a non-transitory computer-readable storage medium, including one or more programs for executing a searching method provided by embodiments of the present disclosure.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of embodiments of the present disclosure will become apparent and more readily appreciated from the following descriptions made with reference to the accompanying drawings, in which:
Fig. 1(a) is a schematic diagram of related search queries provided by a search engine according to a related art;
Fig. 1(b) is a schematic diagram of recommendations provided by the search engine according to a related art
Fig. 1(c) is a schematic diagram of search results provided by the search engine according to a related art;
Fig. 2 is a flow chart of a searching method according to an embodiment of the present disclosure;
Fig. 3(a) is a schematic diagram of search results provided by a searching method according to an embodiment of the present disclosure;
Fig. 3(b) is another schematic diagram of search results provided by a searching method according to an embodiment of the present disclosure;
Fig. 3(c) is yet another schematic diagram of search results provided by a searching method according to an embodiment of the present disclosure;
Fig. 3(d) is still another schematic diagram of search results provided by a searching method according to an embodiment of the present disclosure;
Fig. 3(e) is still another schematic diagram of search results provided by a searching method according to an embodiment of the present disclosure;
Fig. 4 is a flow chart of a searching method according to an embodiment of the present disclosure;
Fig. 5 is a block diagram of a search engine according to an embodiment of the present disclosure;
Fig. 6 is a block diagram of an updating module according to an embodiment of the present disclosure;
Fig. 7 is a block diagram of a search engine according to another embodiment of the present disclosure; and
Fig. 8 is a block diagram of a search engine according to yet another embodiment of the present disclosure.

### DETAILED DESCRIPTION

Reference will be made in detail to embodiments of the present disclosure. Embodiments of the present disclosure will be shown in drawings, in which the same or similar elements and the elements having same or similar functions are denoted by like reference numerals throughout the descriptions. The embodiments described herein according to drawings are explanatory and illustrative, not construed to limit the present disclosure.

In addition, terms such as "first" and "second" are used herein for purposes of description and are not intended to indicate or imply relative importance or significance. Thus, the feature defined with "first" and "second" may comprise one or more this feature. In the description of the present disclosure, the term "a plurality of" means two or more than two, unless specified otherwise.

Referring to the following descriptions and drawings, these and other aspects of the embodiments of the present disclosure will be apparent. In these descriptions and drawings, some specific approaches of the embodiments of the present disclosure are provided, so as to show some ways to perform the principle of the embodiments of the present disclosure, however it should be understood that the embodiment of the present disclosure is not limited thereby. Instead, the embodiments of the present disclosure comprise all the variants, modifications and their equivalents within the spirit and scope of the present disclosure as defined by the claims.

In order to solve the problems in the searching mechanism based on a search query matching, a searching method and a search engine are provided according to an embodiment of the present disclosure. In the following, the searching method and the search engine according to embodiments of the present disclosure will be described in detail with reference to drawings.

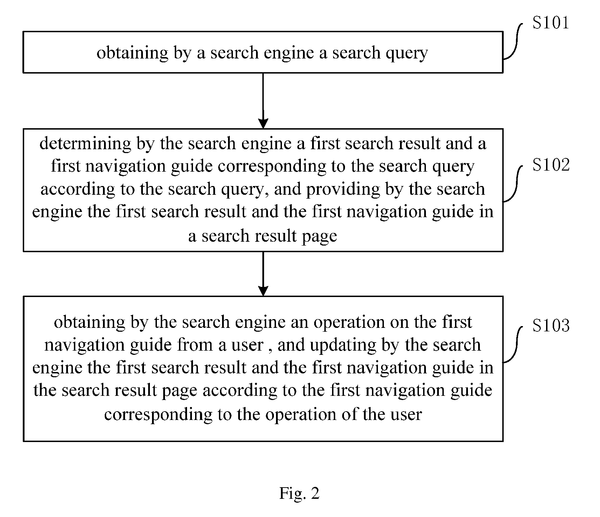

Fig. 2 is a flow chart of a searching method according to an embodiment of the present disclosure.

As shown in Fig. 2, the searching method includes the following steps.

In step S101, a search query is obtained by a search engine.

Specifically, in some embodiments, the user can input the search query in an input box provided by the search engine to enable the search engine to obtain the search query, also the user can input the search query in many kinds of input boxes for quick searching to enable the search engine to obtain the search query, and this is not limited in embodiments of the present method.

In step S102, a first search result and a first navigation guide corresponding to the search query according to the search query are determined by the search engine, and the first search result and the first navigation guide are provided in a search result page by the search engine.

Specifically, determining by the search engine the first search result can refer to the related art, which is not limited in embodiments of the present method. The first navigation guide corresponding to the search query may be information associated with a semantic meaning of the search query and being configured for describing the search query in many aspects, for example, the first navigation guide may be lateral correlation information of the search query, also may be correlation information corresponding to a plurality of demand dimensions of the search query. The first navigation guide can guide the user in many aspects, and can enable the user to select an appropriate search query and to obtain the search result meeting the demand of the user.

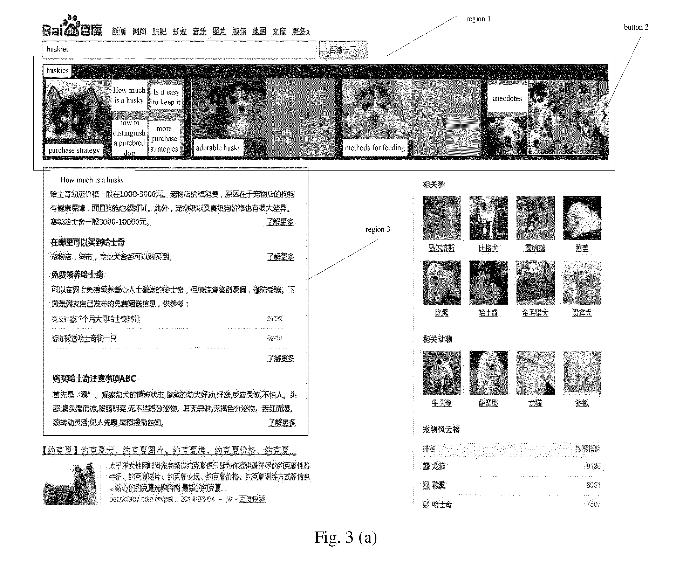

For one example, referring to Fig. 3(a), Fig. 3(a) is a schematic diagram of search results provided by a searching method according to an embodiment of the present disclosure. As shown in Fig. 3(a), if the user inputs a search query (such as "husky", "husky dog"), as shown in region 1 in Fig. 3(a), the first navigation guide provided by the search engine are the plurality of first level demand dimensions about huskies, i.e. the plurality of first level demand dimensions such as "purchase strategy", "adorable husky", "methods for feeding" and "anecdotes", and each first level demand dimension includes corresponding lower level demand dimensions, also the user can click button 2 in Fig. 3(a) to view more navigation guides.

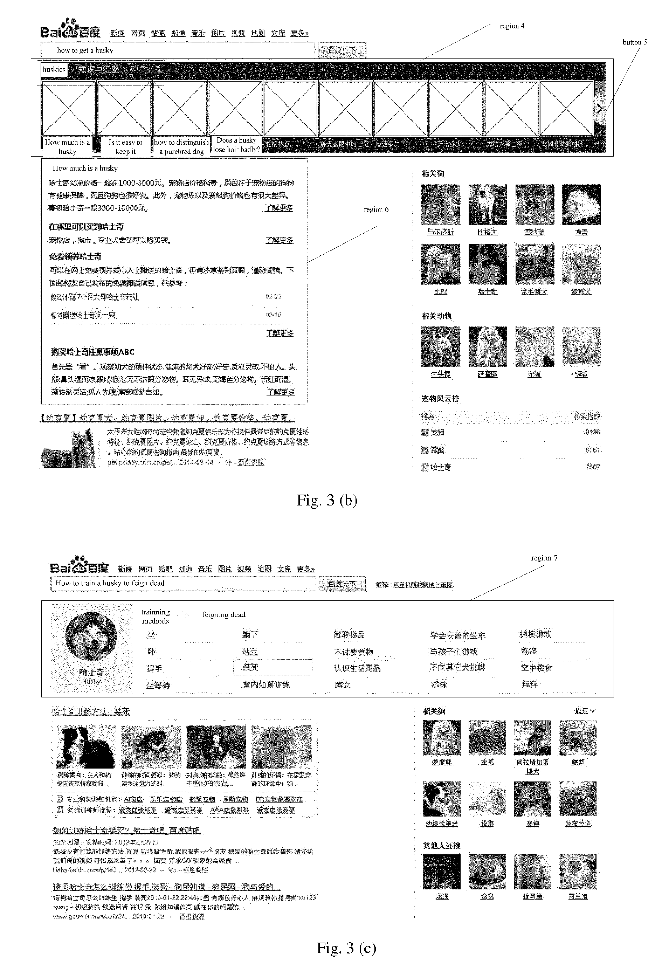

For another example, referring to Fig. 3(b), Fig. 3(b) is a schematic diagram of search results provided by a searching method according to an embodiment of the present disclosure. As shown in Fig. 3(b), if the user inputs a search query (such as "how to get a husky", "buying a husky"), as shown in region 4 in Fig. 3(b), the first navigation guide provided by the search engine may be the lateral correlation information such as "How much is a husky", "Is it easy to keep it ? ", "how to distinguish a purebred dog", also the user can click button 5 in Fig 3(b) to view more navigation guides.

It should be understood that, the above-described examples are merely illustrative, those having the ordinary skills in the related art can make changes, alternatives, and modifications in the embodiments without departing from spirit, principles and scope of the present disclosure.

In step S103, an operation on the first navigation guide from a user is obtained by the search engine, and the first search result and the first navigation guide in the search result page are updated by the search engine according to the first navigation guide corresponding to the operation of the user.

Specifically, after the search engine provides the first navigation guide, the user can select the corresponding first navigation guide according to his/her actual demand and then the search engine can update the first search result and the first navigation guide according to the selected first navigation guide. For example, as shown in Fig. 3(a), after the user clicks on the first navigation guide "purchase strategy", the search engine can provide the search results corresponding to the first navigation guide "purchase strategy" in region 4 in Fig. 3(a), and the updated navigation guides corresponding to the first navigation guide "purchase strategy" can be shown in region 4 in Fig. 3(b). For another example, as shown in Fig. 3(b), after the user clicks on the first navigation guide "How much is a husky", the search engine can provide the search results corresponding to the first navigation guide "How much is a husky" in region 6 in Fig. 3(b). It should be understood that, the above-described examples are merely illustrative, those having the ordinary skills in the related art can make changes, alternatives, and modifications in the embodiments without departing from spirit, principles and scope of the present disclosure.

With the searching method according to an embodiment of the present disclosure, by determining by the search engine the first search result and the first navigation guide corresponding to the search query according to the search query, on the one hand, the user can locate the search query corresponding to his/her demand and the corresponding search result quickly according to the first navigation guide, and the defect of the related art that the user does not know how to build the search query to obtain the search result meeting the demand of the user may be overcome, such that even if the user does not know how to build the search query, the search result meeting the demand of the user can be gradually defined according to the navigation guide; on the other hand, the user can obtain the corresponding search results by clicking on different navigation guides in the search result page without performing a search again. In addition, the first navigation guide corresponding to the search query may be information associated with a semantic meaning of the search query and being configured for describing the search query in many aspects. For example, the first navigation guide may be lateral correlation information of the search query, also may be correlation information corresponding to a plurality of demand dimensions of the search query. The first navigation guide can guide the user in many aspects to enable the user to select an appropriate search query and to obtain the search result meeting the demand of the user.

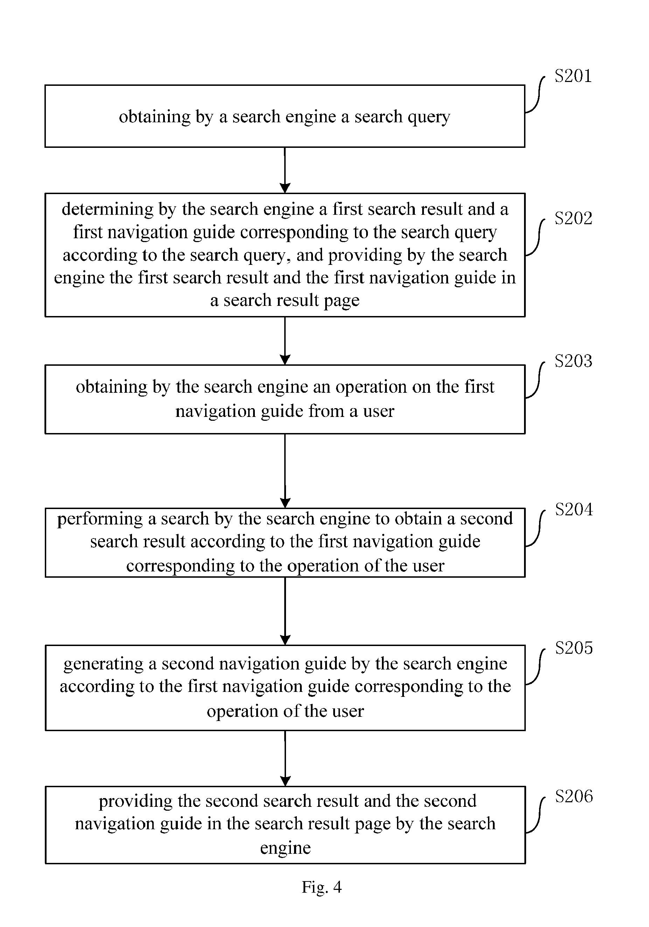

Fig. 4 is a flow chart of a searching method according to an embodiment of the present disclosure.

As shown in Fig. 4, the searching method includes the following steps.

In step S201, a search query is obtained by a search engine.

Specifically, in some embodiments, the user can input the search query in an input box provided by the search engine to enable the search engine to obtain the search query, also the user can input the search query in many kinds of input boxes for quick searching to enable the search engine to obtain the search query, and this is not limited in embodiments of the present method.

In step S202, a first search result and a first navigation guide corresponding to the search query according to the search query are determined by the search engine, and the first search result and the first navigation guide are provided in a search result page by the search engine.

Specifically, determining by the search engine the first search result can refer to the related art, which is not limited in embodiments of the present method. The first navigation guide corresponding to the search query may be information associated with a semantic meaning of the search query and being configured for describing the search query in many aspects, for example, the first navigation guide may be lateral correlation information of the search query, also may be correlation information corresponding to a plurality of demand dimensions of the search query. The first navigation guide can guide the user in many aspects, and can enable the user to select an appropriate search query and to obtain the search result meeting the demand of the user.

For one example, referring to Fig. 3(a), Fig. 3(a) is a schematic diagram of search results provided by a searching method according to an embodiment of the present disclosure. As shown in Fig. 3(a), if the user inputs a search query (such as "husky", "husky dog"), as shown in region 1 in Fig. 3(a), the first navigation guide provided by the search engine, may be the plurality of first level demand dimensions about huskies, i.e. the plurality of first level demand dimensions such as "purchase strategy", "adorable husky", "methods for feeding", "anecdotes", and each first level demand dimension includes corresponding lower level demand dimensions, also the user can click button 2 in Fig. 3(a) to view more navigation guides.

For another example, referring to Fig. 3(b), Fig. 3(b) is a schematic diagram of search results provided by a searching method according to an embodiment of the present disclosure. As shown in Fig. 3(b), if the user inputs a search query (such as "how to get a husky", "buying a husky"), as shown in region 4 in Fig. 3(b), the first navigation guide provided by the search engine may be the lateral correlation information such as "How much is a husky", "Is it easy to keep it ? ", "how to distinguish a purebred dog", also the user can click button 5 in Fig 3(b) to view more navigation guides.

It should be understood that, the above-described examples are merely illustrative, , those having the ordinary skills in the related art can make changes, alternatives, and modifications in the embodiments without departing from spirit, principles and scope of the present disclosure.

In step S203, an operation on the first navigation guide from a user is obtained by the search engine.

For example, after the first navigation guide is provided by the search engine, the user can click on the first navigation guide, such that the search engine can obtain the operation on the first navigation guide from the user.

In step S204, a search can be performed by the search engine to obtain a second search result according to the first navigation guide corresponding to the operation of the user.

For example, as shown in Fig. 3(b), after the user clicks on the first navigation guide "How much is a husky", the search engine can obtain the second search result according to the first navigation guide "How much is a husky".

In step S205, a second navigation guide is generated by the search engine according to the first navigation guide corresponding to the operation of the user.

For example, as shown in Fig. 3(a), after the user clicks on the first navigation guide "buying a husky", the second navigation guides generated by the search engine can be shown in region 4 in Fig. 3(b).

It should be understood, S204 and S205 are executed regardless of the order.

In step S206, the second search result and the second navigation guide are provided in the search result page by the search engine.

With the searching method according to an embodiment of the present disclosure, by providing the second search result and the second navigation guide in the search result page according to the first navigation guide corresponding to the operation of the user, the second search result and the second navigation guide are in comply with the demand and intention of the user and the demand of the user may be located directly.

In some embodiments, the navigation guide (i.e. the first navigation guide and the second navigation guide) can be obtained by a variety of ways, for example, the navigation guide can be obtained by analyzing a search log of the user. In some embodiments, the search engine determines the navigation guide corresponding to the search query by performing a semantic analysis on the search query, in which the semantic analysis can be understood with reference to the related art, which is not described herein.

In some embodiments, the search engine includes a plurality of levels of demand dimensions. For example, with respect to the search query "husky", "purchase strategy", "adorable husky", "methods for feeding", and "anecdotes" compose the first level of demand dimensions corresponding to the search query "husky", and "How much is a husky", and "Is it easy to keep it?" compose the second level of demand dimensions corresponding to the first level of demand dimension "purchase strategy". In this way, the search engine may include a plurality of levels of demand dimensions.

In some embodiments, the navigation guide (i.e. the first navigation guide and the second navigation guide) includes a plurality of first level demand dimensions. For example, "purchase strategy", "adorable husky", "methods for feeding", and "anecdotes" can be the plurality of first level demand dimensions.

In some embodiments, the searching method further includes the step (not shown the drawings) of sequencing the plurality of first level demand dimensions in the first navigation guide according to a query frequency and/or a user search record. Specifically, sequencing the plurality of first level demand dimensions can refer to the related art, which is not described herein. The hot demand dimension can be at the top part of a list of the first level demand dimensions by sequencing the plurality of first level demand dimensions.

In some embodiments, the navigation guide (i.e. the first navigation guide and the second navigation guide) includes a plurality of first level demand dimensions and at least one lower level demand dimension corresponding to each first level demand dimension. For example, as shown in Fig. 3(a), the navigation guide includes the plurality of first level demand dimensions (such as "purchase strategy", "adorable husky", "methods for feeding", and "anecdotes") and the at least one lower level demand dimension corresponding to each first level demand dimension (for example the lower level demand dimensions (such as "How much is a husky", "Is it easy to keep it ? ", and "how to distinguish a purebred dog") corresponding to the first level demand dimension "purchase strategy") .

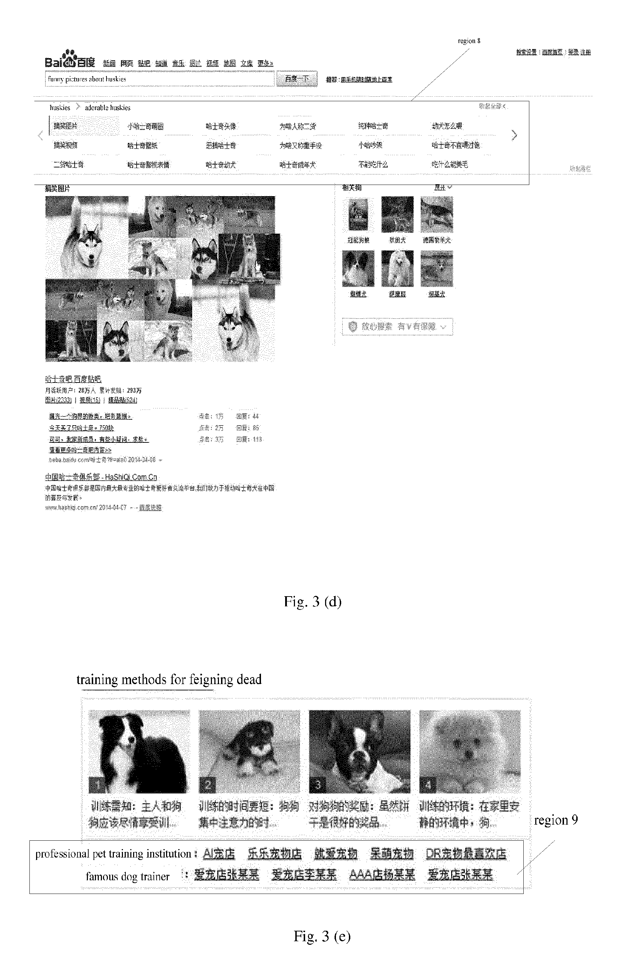

In some embodiments, the searching method can also perform a requirement analysis and an intention recognition with respect to the search query and locate the guidance information of the user according to the requirement analysis and the intention recognition directly. For example, Fig. 3(c) is another schematic diagram of search results provided by a searching method according to an embodiment of the present disclosure, as shown in Fig. 3(c), the user inputs the search query "How to train a husky to feign dead", by performing the requirement analysis and the intention recognition, the user may want to obtain knowledge about training a husky, so the navigation guides illustrating the training methods are located directly, as shown in region 7 in Fig. 3(c), which may be selected by the user. For another example, Fig. 3(d) is still another schematic diagram of search results provided by a searching method according to an embodiment of the present disclosure, as shown in Fig. 3(d), the user inputs the search query " funny pictures about huskies", by performing the requirement analysis and the intention recognition, the user may want to obtain funny pictures, wallpapers, videos about huskies, so the navigation guides shown in region 8 in Fig. 3(d) are located directly, which may be selected by the user.

In some embodiments, the searching method further includes the step (not shown in the drawings) of providing a recommendation in the search result page according to the demand dimension corresponding to the operation of the user. Specifically, in addition to help the user to clarify his/her search intention by the navigation guide, the best search result needs to be provided to the user such that the user does not feel disappointed. Thus, the recommendation needs to be provided in the search result page according to the demand dimension corresponding to the operation of the user. For example, Fig. 3(e) is yet another schematic diagram of search results provided by a searching method according to an embodiment of the present disclosure, as shown in Fig. 3(e), when the user searches for the search query "How to train a husky to feign dead", the search engine can provide the training methods for feigning dead in the search result page. After obtaining the training methods for feigning dead, the user may have a potential demand or a related appeal. If the user learns that it is difficult to train the husky to feign death after viewing the training methods for feigning dead, the user may want to find a professional pet training institution to help himself/herself to train the husky, or even may hope to find some famous dog trainers to train the husky, such that the corresponding recommendations may be shown in region 9 in Fig. 3(e).

In order to achieve the above-described embodiments, a search engine can be provided according to embodiments of the present disclosure.

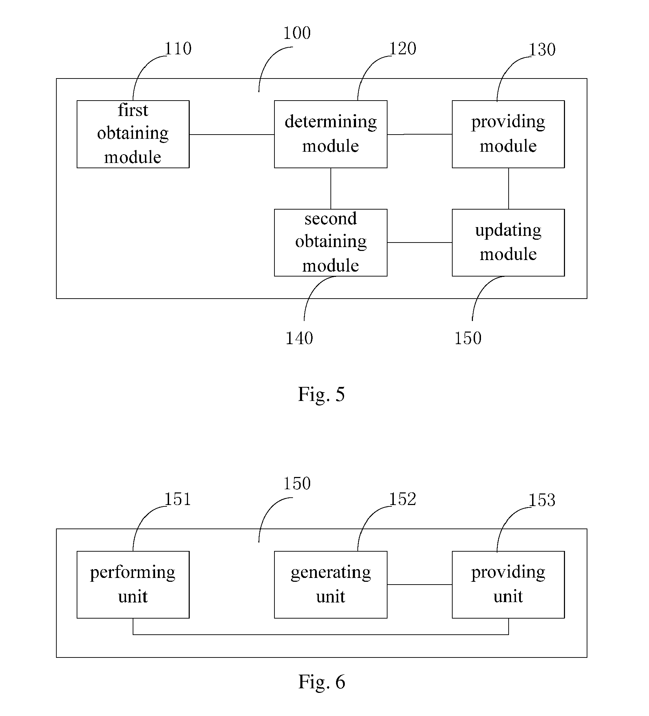

Fig. 5 is a block diagram of a search engine according to an embodiment of the present disclosure.

As shown in Fig. 5, the search engine 100 includes a first obtaining module 110, a determining module 120, a providing module 130, a second obtaining module 140 and an updating module 150.

Specifically, the first obtaining module 110 is configured to obtain a search query. More specifically, in some embodiments, the user can input the search query in an input box provided by the search engine to enable the first obtaining module 110 to obtain the search query, also the user can input the search query in many kinds of input boxes for quick searching to enable the first obtaining module 110 to obtain the search query, and this is not limited in embodiments of the present method.

The determining module 120 is configured to determine a first search result and a navigation guide corresponding to the search query according to the search query. The providing module 130 is configured to provide the first search result and the first navigation guide in a search result page. More specifically, determining by the determining module 120 the first search result can refer to the related art, which is not limited in embodiments of the present method. The first navigation guide corresponding to the search query may be information associated with a semantic meaning of the search query and being configured for describing the search query in many aspects, for example, the first navigation guide may be lateral correlation information of the search query, also may be correlation information corresponding to a plurality of demand dimensions of the search query. The first navigation guide can guide the user in many aspects, and can enable the user to select an appropriate search query and to obtain the search result meeting the demand of the user.

For one example, referring to Fig. 3(a), Fig. 3(a) is a schematic diagram of search results provided by a searching method according to an embodiment of the present disclosure. As shown in Fig. 3(a), if the user inputs a search query (such as "husky", "husky dog"), as shown in region 1 in Fig. 3(a), the first navigation guide provided by the providing module 130 are the plurality of first level of demand dimensions about the husky, i.e. the plurality of first level of demand dimensions such as "purchase strategy", "adorable husky", "methods for feeding", "anecdotes", and each first level demand dimension includes a corresponding lower level demand dimension, also the user can click button 2 in Fig. 3(a) to view more navigation guides.

For another example, referring to Fig. 3(b), Fig. 3(b) is a schematic diagram of search results provided by a searching method according to an embodiment of the present disclosure. As shown Fig. 3(b), if the user inputs a search query (such as "how to get a husky", "buying a husky"), as shown in region 4 in Fig. 3(b), the first navigation guide provided by the providing module 130 may be the lateral correlation information such as "How much is a husky", "Is it easy to keep it ? ", "how to distinguish a purebred dog", also the user can click button 5 in Fig 3(b) to view more navigation guides.

It should be understood that, the above-described examples are merely illustrative, those having the ordinary skills in the related art can make changes, alternatives, and modifications in the embodiments without departing from spirit, principles and scope of the present disclosure.

The second obtaining module 140 is configured to obtain an operation on the first navigation guide from a user. The updating module 150 is configured to update the first search result and the first navigation guide in the search result page according to the first navigation guide corresponding to the operation of the user. More specifically, after the providing module 130 provides the first navigation guide, the user can select the corresponding first navigation guide according to his/her actual demand and then the updating module 150 can update the first search result and the first navigation guide according to the selected first navigation guide. For example, as shown in Fig. 3(a), after the user clicks on the first navigation guide "purchase strategy", the search engine can provide the search results corresponding to the first navigation guide "purchase strategy" in region 4 in Fig. 3(a), and the updated navigation guides corresponding to the first navigation guide "purchase strategy" can be shown in region 4 in Fig. 3(b). For another example, as shown in Fig. 3(b), after the user clicks on the first navigation guide "How much is a husky", the updating module 150 can provide the search results corresponding to the first navigation guide "How much is a husky" in region 6 in Fig. 3(b). It should be understood that, the above-described examples are merely illustrative, those having the ordinary skills in the related art can make changes, alternatives, and modifications in the embodiments without departing from spirit, principles and scope of the present disclosure.

With the he search engine according to an embodiment of the present disclosure, by determining by the search engine the first search result and the first navigation guide corresponding to the search query according to the search query, on the one hand, the user can locate the search query corresponding to his/her demand and the corresponding search result quickly according to the first navigation guide, and the defect of the related art that the user does not know how to build the search query to obtain the search result meeting the demand of the user may be overcome, such that even if the user does not know how to build the search query, the search result meeting the demand of the user can be gradually defined according to the first navigation guide; on the other hand, the user can obtain the corresponding search results by clicking on different navigation guides in the search result page without performing a search again. In addition, the first navigation guide corresponding to the search query may be information associated with a semantic meaning of the search query and being configured for describing the search query in many aspects. For example, the first navigation guide may be lateral correlation information of the search query, also may be correlation information corresponding to a plurality of demand dimensions of the search query. The first navigation guide can guide the user in many aspects to enable the user to select an appropriate search query and to obtain the search result meeting the demand of the user.

Fig. 6 is a block diagram of an updating module according to an embodiment of the present disclosure.

As shown in Fig. 6, the updating module 150 includes a performing unit 151, a generating unit 152 and a providing unit 153.

Specifically, the performing unit is configured to perform a search to obtain a second search result according to the first navigation guide corresponding to the operation of the user, for example, as shown in Fig. 3(b), after the user clicks on the first navigation guide "How much is a husky", the search engine can obtain the second search results according to the first navigation guide "How much is a husky"; the generating unit 152 is configured to generate a second navigation guide according to the first navigation guide corresponding to the operation of the user, for example, as shown in Fig. 3(a), after the user clicks on the first navigation guide "buying a husky", the second navigation guides generated by the search engine can be shown in region 4 in Fig. 3(b); the providing unit 153 is configured to provide the second search result and the second navigation guide in the search result page.

Thus, by providing the second search result and the second navigation guide in the search result page according to the first navigation guide corresponding to the operation of the user, the second search result and the second navigation guide are in comply with the demand and intention of the user and the demand of the user may be located directly.

In some embodiments, the navigation guide (i.e. the first navigation guide and the second navigation guide) can be obtained by a variety of ways, for example, the navigation guide can be obtained by analyzing a search log of the user. In some embodiments, the search engine determines the navigation guide corresponding to the search query by performing a semantic analysis on the search query, in which the semantic analysis can be understood with reference to the related art, which is not described herein.

In some embodiments, the search engine includes a plurality of levels of demand dimensions. For example, with respect to the search query "husky", "purchase strategy", "adorable husky", "methods for feeding", and "anecdotes" compose the first level of demand dimensions corresponding to the search query "husky", and "How much is a husky", and "Is it easy to keep it ? " compose the second level of demand dimensions corresponding to the first level of demand dimension "purchase strategy". In this way, the search engine may include a plurality of levels of demand dimensions.

In some embodiments, the navigation guide (i.e. the first navigation guide and the second navigation guide) includes a plurality of first level demand dimensions. For example, "purchase strategy", "adorable husky", "methods for feeding", and "anecdotes" can be the plurality of first level demand dimensions.

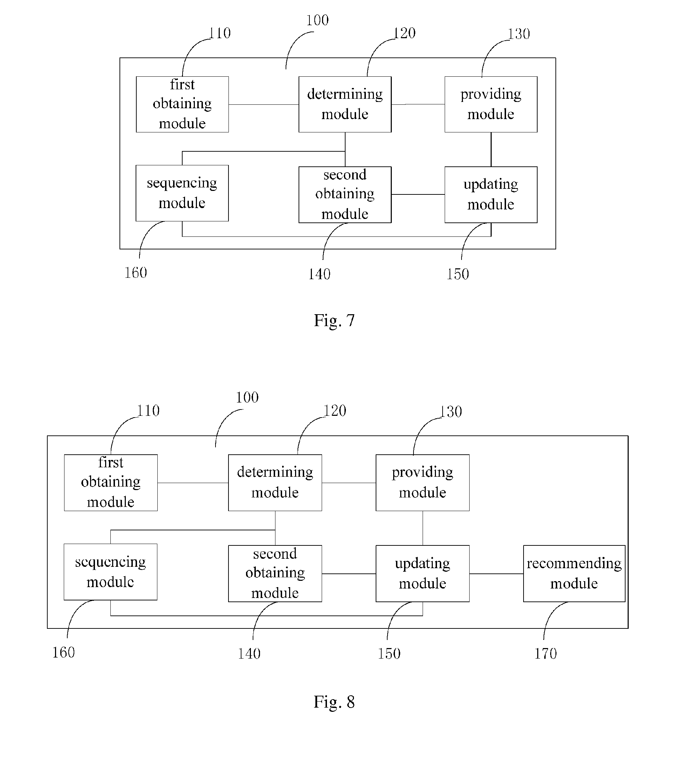

Fig. 7 is a block diagram of a search engine according to still another embodiment of the present disclosure.

As shown in Fig. 7, the search engine 100 includes a first obtaining module 110, a determining module 120, a providing module 130, a second obtaining module 140, an updating module 150 and a sequencing module 160.

Specifically, the sequencing module 160 is configured to sequence the plurality of first level demand dimensions in the first navigation guide according to a query frequency and/or a user search record. More specifically, sequencing the plurality of first level demand dimensions can refer to the related art, which is not described herein. The hot demand dimension can beat the top part of a list of the first level demand dimensions by sequencing the plurality of first level demand dimensions.

Fig. 8 is a block diagram of a search engine according to yet another embodiment of the present disclosure.

As shown in Fig. 8, the search engine 100 includes a first obtaining module 110, a determining module 120, a providing module 130, a second obtaining module 140, an updating module 150, a sequencing module 160 and a recommending module 170.

Specifically, the recommending module 170 is configured to provide a recommendation in the search result page according to the demand dimension corresponding to the operation of the user. More specifically, in addition to help the user to clarify his/her search intention by the navigation guide, the best search result needs to be provided to the user such that the user does not feel disappointed. Thus, the recommendation needs to be provided in the search result page according to the demand dimension corresponding to the operation of the user. For example, Fig. 3(e) is a schematic diagram of a searching method according to an embodiment of the present disclosure, as shown in Fig. 3(e), when the user searches for the search query "How to train a husky to feign dead"", the search engine can provide the training method for feigning dead in the search result page. After obtaining the training methods for feigning dead, the user may have a potential demand or a related appeal. If the user learns that it is difficult to train the husky to feign death after viewing the training methods for feigning dead, the user may want to find a professional pet training institution to help himself/herself to train the husky, or even may hope to find some famous dog trainers to train the husky, such that the corresponding recommendations may be shown in region 9 in Fig. 3(e).

A non-transitory computer-readable storage medium is provided by embodiments of the present disclosure, including one or more programs for executing a searching method provided by embodiments of the present disclosure.

Any process or method described in the flowing diagram or other means may be understood as a module, segment or portion including one or more executable instruction codes of the procedures configured to achieve a certain logic function or process, and the preferred embodiments of the present disclosure include other performances, in which the performance may be achieved in other orders instead of the order shown or discussed, such as in a almost simultaneous way or in an opposite order, which should be appreciated by those having ordinary skills in the art to which embodiments of the present disclosure belong.

It should be understood that, each part of the present invention may be implemented by the hardware, software, firmware or the combination thereof. In the above embodiments of the present invention, the plurality of procedures or methods may be implemented by the software or hardware stored in the computer memory and executed by the proper code execution system. For example, if the plurality of procedures or methods is to be implemented by the hardware, like in another embodiment of the present invention, any one of the following known technologies or the combination thereof may be used, such as discrete logic circuits having logic gates for implementing various logic functions upon an application of one or more data signals, application specific integrated circuits having appropriate logic gates, programmable gate arrays (PGA), field programmable gate arrays (FPGA).

Reference throughout this specification to "an embodiment," "some embodiments," "one embodiment", "another example," "an example," "a specific example," or "some examples," means that a particular feature, structure, material, or characteristic described in connection with the embodiment or example is included in at least one embodiment or example of the present disclosure. Thus, the appearances of the phrases such as "in some embodiments," "in one embodiment", "in an embodiment", "in another example," "in an example," "in a specific example," or "in some examples," in various places throughout this specification are not necessarily referring to the same embodiment or example of the present disclosure. Furthermore, the particular features, structures, materials, or characteristics may be combined in any suitable manner in one or more embodiments or examples.

Although explanatory embodiments have been shown and described, it would be appreciated by those skilled in the art that the above embodiments cannot be construed to limit the present disclosure, and changes, alternatives, and modifications can be made in the embodiments without departing from spirit, principles and scope of the present disclosure.

## Claims

1. A searching method, comprising:
obtaining by a search engine (100) a search query;
determining by the search engine (100) a first search result and a first navigation guide corresponding to the search query according to the search query, and providing by the search engine the first search result and the first navigation guide in a search result page;
obtaining by the search engine (100) an operation on the first navigation guide from a user, and updating by the search engine the first search result and the first navigation guide in the search result page according to the first navigation guide corresponding to the operation of the user.

2. The method according to claim 1, wherein the search engine comprises a plurality of levels of demand dimensions and the search engine determines the first navigation guide corresponding to the search query by performing a semantic analysis on the search query.

3. The method according to claim 2, wherein the first navigation guide comprises a plurality of first level demand dimensions.

4. The method according to claim 3, further comprising:
sequencing the plurality of first level demand dimensions in the first navigation guide according to a query frequency and/or a user search record.

5. The method according to claim 2, wherein the first navigation guide comprises a plurality of first level demand dimensions and at least one lower level demand dimension corresponding to each first level demand dimension.

6. The method according to claim 3 or 5, further comprising:
providing by the search engine a recommendation in the search result page according to a demand dimension corresponding to the operation of the user.

7. The method according to any of claims 1-6, wherein updating by the search engine the first search result and the first navigation guide in the search result page according to the first navigation guide corresponding to the operation of the user comprises:
performing a search to obtain a second search result according to the first navigation guide corresponding to the operation of the user;
generating a second navigation guide according to the first navigation guide corresponding to the operation of the user; and
providing the second search result and the second navigation guide in the search result page.

8. A search engine (100), comprising:
a first obtaining module (110), configured to obtain a search query;
a determining module (120), configured to determine a first search result and a first navigation guide corresponding to the search query according to the search query;
a providing module (130), configured to provide the first search result and the first navigation guide in a search result page;
a second obtaining module (140), configured to obtain an operation on the first navigation guide from a user ;
an updating module (150), configured to update the first search result and the first navigation guide in the search result page according to the first navigation guide corresponding to the operation of the user.

9. The search engine according to claim 8, wherein the search engine comprises a plurality of levels of demand dimensions and the determining module determines the first navigation guide corresponding to the search query by performing a semantic analysis on the search query.

10. The search engine according to claim 9, wherein the first navigation guide comprises a plurality of first level demand dimensions.

11. The search engine according to claim 10, further comprising:
a sequencing module, configured to sequence the plurality of first level demand dimensions in the first navigation guide according to a query frequency and/or a user search record.

12. The search engine according to claim 8, wherein the first navigation guide comprises a plurality of first level demand dimensions and at least one lower level demand dimension corresponding to each first level demand dimension.

13. The search engine according to claim 10 or 12, further comprising:
a recommending module, configured to provide a recommendation in the search result page according to a demand dimension corresponding to the operation of the user.

14. The search engine according to any of claims 8-13, wherein the updating module comprises:
a performing unit, configured to perform a search to obtain a second search result according to the first navigation guide corresponding to the operation of the user;
a generating unit, configured to generate a second navigation guide according to the first navigation guide corresponding to the operation of the user;
a providing unit, configured to provide the second search result and the second navigation guide in the search result page.

15. A non-transitory computer-readable storage medium, comprising one or more programs for executing a searching method according to any one of claims 1-7.
